# EUROPEAN PATENT APPLICATION

(11) **EP 4 653 022 A1**
(43) Date of publication of application: **26.11.2025**
(21) Application number: 23917758.7
(22) Date of filing: 25.12.2023
(51) Int. Cl.: A61L 9/22, B05B 5/025, B60H 3/00, B60H 3/02, F24F 8/24, F24F 8/30, F24F 8/50

(54) **FUNCTIONAL SUBSTANCE GENERATION DEVICE**

(30) Priority: 20.01.2023 JP 2023007592
(71) Applicant: Panasonic Intellectual Property Management Co., Ltd., Kadoma-shi, Osaka 571-0057 (JP)
(72) Inventor: KITAGAWA, Tetsuya, Kadoma-shi, Osaka 571-0057 (JP); HIROBE, Masahiro, Kadoma-shi, Osaka 571-0057 (JP); HIRAI, Kouiti, Kadoma-shi, Osaka 571-0057 (JP); KAWASAKI, Motoji, Kadoma-shi, Osaka 571-0057 (JP); MATSUURA, Haruto, Kadoma-shi, Osaka 571-0057 (JP); ITO, Mikio, Kadoma-shi, Osaka 571-0057 (JP); URATANI, Yutaka, Kadoma-shi, Osaka 571-0057 (JP)
(74) Representative: Grünecker Patent- und Rechtsanwälte PartG mbB
(86) International application number: PCT/JP2023/046325
(87) International publication number: WO 2024/154548

(57) **Abstract**

The present disclosure provides a functional substance generation device in which the volume of electric discharge sound is reduced as necessary. The functional substance generation device (E1) of the present disclosure includes a discharge electrode (21), a voltage application circuit (11), and a signal input unit (14). The voltage application circuit (11) applies an application voltage (Vo) to the discharge electrode (21) to allow the discharge electrode (21) to generate electric discharge, and adjusts an electric discharge current (lo) that is a current flowing through the discharge electrode (21). The signal input unit (14) receives a first control signal (Y1) and a second control signal (Y2) for controlling the operation of the voltage application circuit (11). The voltage application circuit (11) controls the generation amount of the functional substance and the electric discharge sound based on the first control signal (Y1) and the second control signal (Y2).

## Description

### BACKGROUND

### 1. Technical Field

The present disclosure relates to a functional substance generation device.

### 2. Description of the Related Art

Conventionally, as disclosed in Patent Literature 1, a functional substance generation device including a discharge electrode, a counter electrode, and a voltage application circuit is provided. The discharge electrode and the counter electrode are arranged to face each other, and the discharge electrode holds a liquid. The voltage application circuit generates electric discharge between the discharge electrode and the counter electrode by applying a voltage between the discharge electrode and the counter electrode. The liquid held by the discharge electrode is electrostatically atomized by the electric discharge. Citation List

### Patent Literature

Patent Literature 1: Unexamined Japanese Patent Publication No. 2022-89697

### SUMMARY

### (Technical Problem)

In the functional substance generation device, electric discharge sound is generated at the time of electric discharge of the discharge electrode. A person around the functional substance generation device may feel that the electric discharge sound generated by the functional substance generation device is annoying or bothersome. Therefore, the functional substance generation device is required to reduce the volume of the electric discharge sound as necessary.

An object of the present disclosure is to provide a functional substance generation device in which the volume of electric discharge sound is reduced as necessary.

### (Solution to Problem)

A functional substance generation device according to an aspect of the present disclosure includes a discharge electrode, a voltage application circuit, and a signal input unit. The voltage application circuit is configured to apply a voltage to the discharge electrode to allow the discharge electrode to generate electric discharge; the voltage application circuit being configured to adjust an electric discharge current that is a current flowing through the discharge electrode. The signal input unit receives a control signal for controlling an operation of the voltage application circuit. The voltage application circuit controls a generation amount of the functional substance based on the control signal.

### (Advantageous Effects of Invention)

The present disclosure has an effect that the volume of the electric discharge sound can be reduced as necessary.

### BRIEF DESCRIPTION OF DRAWINGS

FIG. 1 is a block diagram of an air conditioning system including a functional substance generation device according to an embodiment.
FIG. 2 is a partial cutaway view illustrating a vehicle in which the air conditioning system according to the embodiment is used.
FIG. 3 is a perspective view illustrating a vehicle interior of the vehicle according to the embodiment.
FIG. 4A is a graph showing a relationship between an electric discharge current and a generation amount of a functional substance in the functional substance generation device according to the embodiment.
FIG. 4B is a graph showing a relationship between the electric discharge current and an electric discharge sound in the functional substance generation device according to the embodiment.
FIG. 5 is a flowchart showing a volume adjustment process of the electric discharge sound in the functional substance generation device according to the embodiment.
FIG. 6 is a block diagram of an air conditioning system including a functional substance generation device according to a first modification.
FIG. 7 is a flowchart showing a volume adjustment process of the electric discharge sound in the functional substance generation device according to the first modification.

### DESCRIPTION OF EMBODIMENT

An embodiment described herein relates generally to a functional substance generation device. More specifically, the embodiment relates to a functional substance generation device that allows a discharge electrode to cause electric discharge.

Hereinafter, a functional substance generation device according to an embodiment will be described in detail with reference to the drawings. However, each drawing described in the following embodiment is a schematic diagram, and a ratio of a size and a thickness of each component does not necessarily reflect an actual dimensional ratio.

The embodiment described below is merely an example of the embodiment of the present disclosure. The present disclosure is not limited to the following embodiment, and various modifications can be made according to design, as long as the effects of the present disclosure can be exhibited.

### (Embodiment)

### (1) Overview

The functional substance generation device of the present disclosure is applicable to a device or a system for the purpose of improving air quality (for example, sterilizing, deodorizing, moisturizing, freshening, and inactivating viruses), suppressing harmful substances, and beauty care. Specifically, the functional substance generation device of the present disclosure is applicable to an air conditioner for a vehicle, a home, and a business, an air purifier for a vehicle, a home, and a business, and a beauty instrument for a vehicle, a home, and a business.

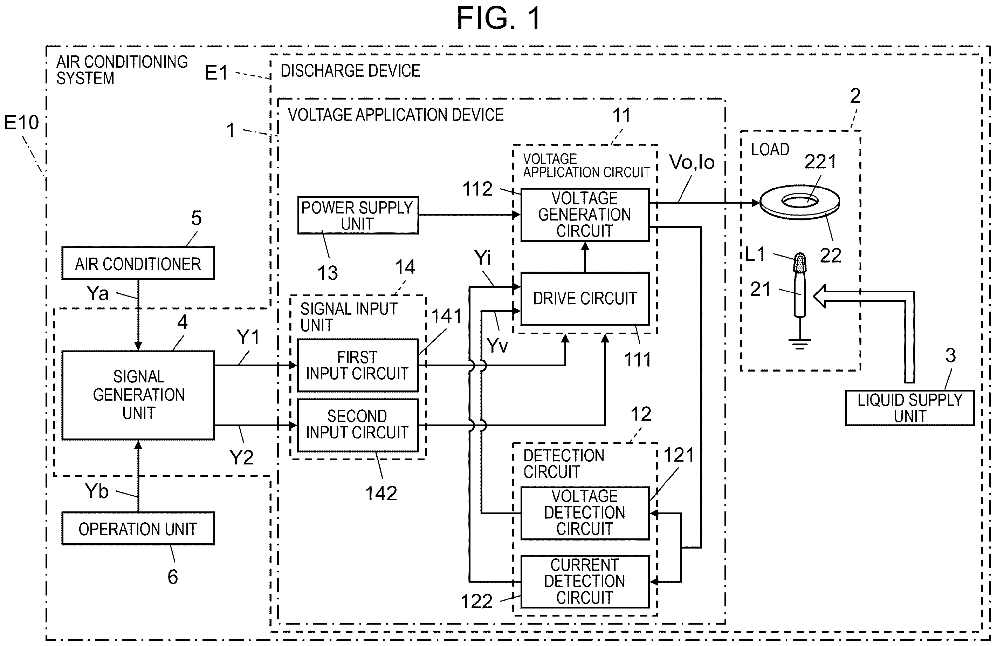

An outline of the functional substance generation device E1 according to the present embodiment will be described with reference to FIG. 1. FIG. 1 is a block diagram of an air conditioning system E10 including the functional substance generation device E1 according to the embodiment.

As shown in FIG. 1, the functional substance generation device E1 according to the present embodiment includes a voltage application device 1 and a load 2.

The voltage application device 1 includes a voltage application circuit 11 and a signal input unit 14. The voltage application circuit 11 applies an application voltage Vo, which is a voltage for causing electric discharge, to the load 2. The signal input unit 14 receives a first control signal Y1 and a second control signal Y2 as control signals for controlling operation of the voltage application circuit 11.

The load 2 includes a discharge electrode 21 and a counter electrode 22. The counter electrode 22 is an electrode disposed to face discharge electrode 21 in such a manner that a gap is formed the discharge electrode 21 and the counter electrode 22. That is, the discharge electrode 21 is disposed to face the counter electrode 22. In the load 2, when the application voltage Vo is applied between the discharge electrode 21 and the counter electrode 22, the electric discharge occurs between the discharge electrode 21 and the counter electrode 22, and an electric discharge current lo flows between the discharge electrode 21 and the counter electrode 22. That is, the electric discharge current lo is a current flowing through the discharge electrode 21 and is also a current flowing through the counter electrode 22.

As described above, the functional substance generation device E1 according to the present embodiment includes the voltage application circuit 11, the signal input unit 14, and the discharge electrode 21 as minimum constituent elements. The functional substance generation device E1 may include other components in addition to the voltage application circuit 11, the signal input unit 14, and the discharge electrode 21. The other components include the counter electrode 22, a liquid supply unit 3, a detection circuit 12, a power supply unit 13, and a signal generation unit 4.

In the functional substance generation device E1 according to the present embodiment, the liquid supply unit 3 has a function of supplying a liquid L1 to the discharge electrode 21. The discharge electrode 21 holds the liquid L1 supplied from the liquid supply unit 3. The state in which the discharge electrode 21 holds the liquid L1 is, for example, a state in which the liquid L1 adheres to the surface of the discharge electrode 21. When the voltage application circuit 11 applies the application voltage Vo between the discharge electrode 21 and the counter electrode 22 in the state where the discharge electrode 21 holds the liquid L1, the electric discharge occurs between the discharge electrode 21 and the counter electrode 22, and the liquid L1 held by the discharge electrode 21 is electrostatically atomized by the electric discharge. That is, the functional substance generation device E1 according to the present embodiment constitutes a so-called electrostatic atomizing apparatus. In the functional substance generation device E1, the liquid L1 held by the discharge electrode 21 is electrostatically atomized by the electric discharge generated between the discharge electrode 21 and the counter electrode 22. In the present embodiment, the liquid L1 held by discharge electrode 21, that is, the liquid L1 to be electrostatically atomized is also simply referred to as "liquid L1".

The voltage application circuit 11 is electrically connected to the discharge electrode 21 and the counter electrode 22. Specifically, the counter electrode 22 is electrically connected to an output terminal of a positive electrode (for example, plus) of the voltage application circuit 11, and the discharge electrode 21 is electrically connected to an output terminal of a negative electrode (for example, ground) of the voltage application circuit 11. The voltage application circuit 11 applies the application voltage Vo between the discharge electrode 21 and the counter electrode 22 to cause the electric discharge between the discharge electrode 21 and the counter electrode 22. In particular, in the present embodiment, it is preferable that the voltage application circuit 11 intermittently cause the electric discharge by changing magnitude of the application voltage Vo.

Then, the functional substance generation device E1 generates radicals and electrostatically atomizes the liquid L1 held by the discharge electrode 21 by causing the electric discharge between the discharge electrode 21 and the counter electrode 22. Thus, the functional substance generation device E1 generates a charged fine particle liquid (for example, charged fine particle water) of nanometer size, the charged fine particle liquid containing the radicals in fine droplets of the electrostatically atomized liquid L1. That is, the functional substance generation device E1 functions as a charged fine particle liquid generating apparatus. The radicals are used as a basis not only for sterilization, deodorization, moisturization, freshness preservation, and inactivation of viruses, but also for exhibiting useful effects in various situations. Hereinafter, the radicals and the charged fine particle liquid may be collectively referred to as functional substances. The functional substance also includes air ions, which will be described later.

In addition, the functional substance generation device E1 generates the charged fine particle liquid containing the radicals, so that the life of the radicals can be extended as compared with the case where the radicals are released into the air alone. Further, since the charged fine particle liquid has, for example, a nanometer size, the charged fine particle liquid can be floated in a relatively wide range.

The functional substance generation device E1 having the above-described configuration can adjust an amount of the functional substance generated by adjusting a power (specifically, the electric discharge current lo and the application voltage Vo) supplied to the load 2. For example, when the power supplied to the load 2 increases, the generation amount of the functional substance increases. When the power supplied to the load 2 decreases, the generation amount of the functional substance decreases. When the electric discharge occurs between the discharge electrode 21 and the counter electrode 22 of the load 2, sound due to the electric discharge, that is, electric discharge sound is generated. When the power supplied to the load 2 increases, volume of the electric discharge sound increases. When the power supplied to the load 2 decreases, the volume of the electric discharge sound decreases. That is, when a generation amount of the functional substance increases, the volume of the electric discharge sound increases. When the generation amount of the functional substance decreases, the volume of the electric discharge sound decreases.

A person around the functional substance generation device E1 may feel that the electric discharge sound generated by the functional substance generation device E1 is annoying or bothersome. Therefore, the functional substance generation device E1 of the present embodiment has the following configuration in order to reduce the volume of the electric discharge sound as necessary.

The functional substance generation device E1 includes the discharge electrode 21, the voltage application circuit 11, and the signal input unit 14. The voltage application circuit 11 applies the application voltage Vo to the discharge electrode 21 to allow the discharge electrode 21 to generate electric discharge. The voltage application circuit adjusts an electric discharge current lo that is a current flowing through the discharge electrode 21. The signal input unit 14 receives the control signals (Y1, Y2) for controlling the operation of the voltage application circuit 11. The voltage application circuit 11 controls the generation amount of the functional substance based on the control signals (Y1, Y2).

When quietness is required on the basis of the control signals (Y1, Y2), the functional substance generation device E1 having the above-described configuration can reduce the volume of the electric discharge sound by suppressing the generation amount of the functional substance. That is, the functional substance generation device E1 can reduce the volume of the electric discharge sound as necessary.

### (2) Details

Next, the functional substance generation device E1 according to the present embodiment and the air conditioning system E10 having the functional substance generation device E1 will be described in detail with reference to FIGS. 1 to 5.

### (2.1) Air Conditioning System

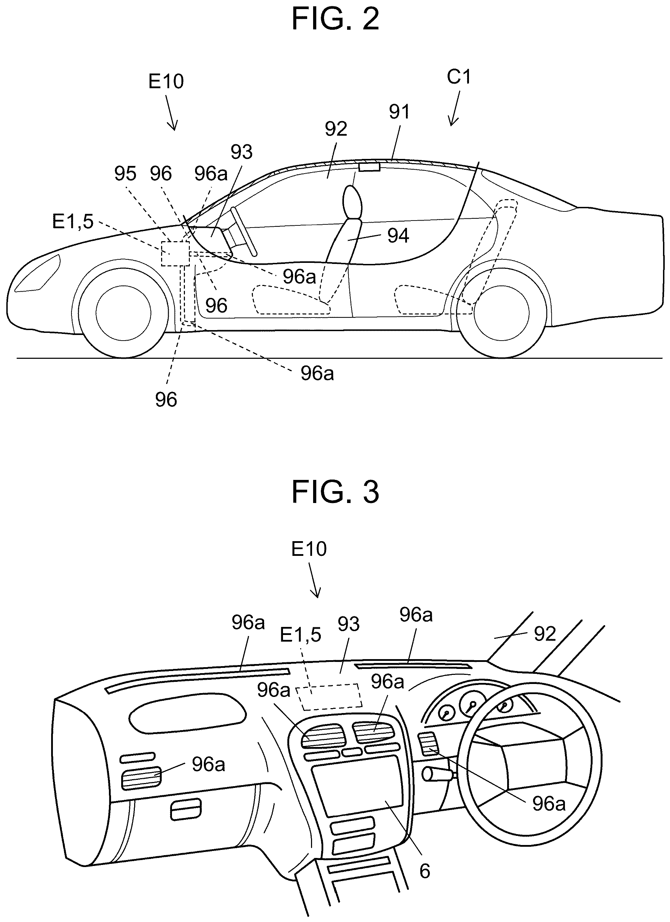

As shown in FIG. 1, the air conditioning system E10 according to the present embodiment includes the functional substance generation device E1, an air conditioner 5, and an operation unit 6. FIG. 2 is a partial cutaway view illustrating a vehicle in which the air conditioning system E10 according to the embodiment is used. FIG. 3 is a perspective view illustrating an interior of a vehicle C1 in the embodiment. As shown in FIGS. 2 and 3, the air conditioning system E10 is used in the vehicle C1. The vehicle C1 is an automobile driven by a person, and is a passenger car, a large vehicle such as a truck or a bus, a train, an electric cart, or a construction machine.

As shown in FIG. 2, the vehicle C1 includes a body 91, a vehicle interior 92, an instrument panel 93, a plurality of seats 94, an equipment compartment 95, and a duct 96. The vehicle C1 corresponds to a target space to which the functional substance is supplied.

The body 91 constitutes an outer shell of the vehicle C1. The vehicle interior 92, which is a space for a person to board, is formed inside the body 91. The plurality of seats 94 including a driver seat and a passenger seat are disposed in the vehicle interior 92. The instrument panel 93 in which a steering wheel and various instruments are mounted is attached to a front portion of the vehicle interior 92. In the front part of the body 91, the equipment compartment 95 which is partitioned from the vehicle interior 92 by the instrument panel 93 is formed. The functional substance generation device E1 and the air conditioner 5 are housed in the equipment compartment 95. The duct 96 is formed in a cylindrical shape extending from the air conditioner 5 to the instrument panel 93, and the air blown out by the air conditioner 5 flows through the duct 96. The air flowing through the duct 96 is blown out into the vehicle interior 92 from an air outlet 96a which is an end portion of the duct 96. That is, the air blown out by the air conditioner 5 flows through the duct 96 and is sent into the vehicle interior 92 from the air outlet 96a.

The air conditioner 5 performs an air conditioning operation and a ventilation operation. The air conditioning operation is an operation of generating conditioned air from inside air or outside air of the vehicle C1 and feeding the conditioned air into the vehicle interior 92 from the air outlet 96a via the duct 96. The ventilation operation is an operation of sending outside air into the vehicle interior 92 from the air outlet 96a through the duct 96. The conditioned air is air having adjusted temperature and humidity. The conditioned air includes, for example, cold air, warm air, dehumidified air, and humidified air.

The functional substance generation device E1 generates a functional substance and delivers the functional substance to the duct 96. The functional substance is contained in the air supplied from the air conditioner 5 in the duct 96, flows in the duct 96 together with the air, and is sent into the vehicle interior 92 from the outlet 96a. That is, when the functional substance generation device E1 is in operation, the functional substance is contained in the air supplied from the air conditioner 5, and the air containing the functional substance is sent into the vehicle interior 92.

The operation unit 6 is provided on the instrument panel 93 (see FIG. 3). The operation unit 6 includes, for example, a touch panel display. The operation unit 6 receives an operation by a person. The human operation is, for example, setting of each operation of the air conditioner 5 and the functional substance generation device E1. The operation setting of the air conditioner 5 includes switching between operation and stop of the air conditioner 5, switching between cooling operation and heating operation, temperature setting, air volume setting, and switching between inside air ventilation and outside air ventilation. The operation setting of the functional substance generation device E1 includes switching between operation and stop of the functional substance generation device E1, setting of the generation amount of the functional substance, and setting of an operation mode of the functional substance generation device E1. the operation mode will be described later. The operation unit 6 may include a microphone and have a voice input function of receiving a voice uttered by a person.

As described above, when the functional substance generation device E1 generates the functional substance and the air containing the functional substance is fed into the vehicle interior 92, the functional substance provides useful effects such as sterilization, deodorization, moisturization, freshness preservation, and virus inactivation in the vehicle interior 92.

### (2.2) Functional Substance Generation Device

As shown in FIG. 1, the functional substance generation device E1 includes the voltage application device 1, the load 2, the liquid supply unit 3, and the signal generation unit 4.

### (2.2.1) Load

The load 2 includes the discharge electrode 21 and the counter electrode 22. The discharge electrode 21 and the counter electrode 22 are disposed to face each other.

The discharge electrode 21 is a rod-shaped electrode. The discharge electrode 21 is formed in a rod shape having a circular cross section, and has a tapered shape in which the cross-sectional area thereof decreases toward the tip of the discharge electrode 21. That is, the discharge electrode 21 is a needle electrode in which the tip portion thereof is formed so as to have a tapered shape. Here, the "tapered shape" is not limited to a shape in which the tip is sharply pointed, and includes a shape in which the tip is rounded.

The counter electrode 22 is disposed to face the tip portion of the discharge electrode 21. The counter electrode 22 has, for example, a flat plate shape in which a recess 221 is formed substantially at the center thereof. The recess 221 is formed in a truncated cone shape by recessing the substantial center of the counter electrode 22 toward the discharge electrode 21. Further, a truncated cone-shaped (for example, dome-shaped) protruding base portion protruding to the side opposite to the discharge electrode 21 is formed at the center portion of the bottom wall of the recess 221.

The thickness direction of the counter electrode 22 (that is, the recess direction of the recess 221) corresponds to the longitudinal direction of the discharge electrode 21. In the plan view (that is, when viewed from the thickness direction of the counter electrode 22), the tip portion of the discharge electrode 21 is located near the center of the recess 221 of the counter electrode 22. A gap (that is, a space) is formed between the discharge electrode 21 and the counter electrode 22. In other words, the counter electrode 22 is disposed to face the discharge electrode 21 in such a manner the gap is formed therebetween, and is spatially separated from the discharge electrode 21.

### (2.2.2) Liquid Supply Unit

The liquid supply unit 3 supplies the liquid L1 for electrostatic atomization to the discharge electrode 21. The liquid supply unit 3 is realized by using a Peltier element as an example. The liquid supply unit 3 cools the discharge electrode 21 to generate dew condensation water as the liquid L1 on the discharge electrode 21. That is, moisture in the air condenses and adheres to the surface of the discharge electrode 21 as the dew condensation water. The condensed water is held by the discharge electrode 21 as the liquid L1. In this configuration, since the liquid supply unit 3 can supply the liquid L1 (that is, the dew condensation water) to the discharge electrode 21 using moisture in the air, it is not necessary to supply and replenish a liquid to the functional substance generation device E1.

### (2.2.3) Voltage Application Device

The voltage application device 1 includes the voltage application circuit 11, the detection circuit 12, the power supply unit 13, and the signal input unit 14.

As shown in FIG. 1, the voltage application circuit 11 includes a drive circuit 111 and a voltage generation circuit 112. The drive circuit 111 is a circuit that drives the voltage generation circuit 112. The voltage generation circuit 112 is a circuit that receives power supply from the power supply unit 13 and generates the application voltage Vo that is a voltage to be applied to the load 2. The power supply unit 13 is, for example, a power supply circuit that generates a DC voltage of about several volts to several tens of volts. In the present embodiment, the description will be made in an assumption that the power supply unit 13 is included in the constituent elements of the voltage application device 1; however , the power supply unit 13 does not have to be included in the constituent elements of the voltage application device 1. The voltage generation circuit 112 generates the application voltage Vo by periodically boosting the input voltage from the power supply unit 13, and applies the application voltage Vo to the load 2.

The voltage application circuit 11 is electrically connected to the load 2 (in a precise sense, to the discharge electrode 21 and the counter electrode 22). The voltage application circuit 11 applies the application voltage Vo which periodically varies to the load 2. The voltage application circuit 11 applies the application voltage Vo between the discharge electrode 21 and the counter electrode 22, for example, in such a manner that the discharge electrode 21 serves as a negative electrode (for example, ground) and that the counter electrode 22 serves as a positive electrode (for example, plus).

In the present embodiment, the voltage application circuit 11 operates based on a monitoring target of the detection circuit 12. Here, the "monitoring target" is the application voltage Vo and the electric discharge current Io, which are the voltage output by the voltage application circuit 11 and the current output by the voltage application circuit 11, respectively.

As shown in FIG. 1, the detection circuit 12 includes a voltage detection circuit 121 and a current detection circuit 122. The voltage detection circuit 121 monitors the application voltage Vo of the voltage application circuit 11 and detects the magnitude (i.e., a voltage value) of the application voltage Vo. The voltage detection circuit 121 outputs a voltage detection signal Yv including data of the detection value of the application voltage Vo to the drive circuit 111 of the voltage application circuit 11. The current detection circuit 122 monitors the electric discharge current lo output from the voltage application circuit 11, and detects the magnitude (i.e., a current value) of the electric discharge current lo. The current detection circuit 122 outputs a current detection signal Yi including data of the detection value of the electric discharge current lo to the drive circuit 111 of the voltage application circuit 11. The drive circuit 111 drives the voltage generation circuit 112 based on the voltage detection signal Yv and the current detection signal Yi to control the application voltage Vo and the electric discharge current lo.

Since there is a correlation between the application voltage Vo (that is, the secondary voltage) output from the voltage generation circuit 112 and the input voltage (that is, the primary voltage) of the voltage generation circuit 112, the voltage detection circuit 121 may indirectly detect the application voltage Vo from the input voltage. Similarly, since there is a correlation between the electric discharge current lo (that is, the secondary current) output from the voltage generation circuit 112 and the input current (that is, the primary current) of the voltage generation circuit 112, the current detection circuit 122 may indirectly detect the electric discharge current lo from the input current.

When voltage application circuit 11 increases the application voltage Vo with time, a corona electric discharge is started in the discharge electrode 21 due to local dielectric breakdown, and the electric discharge current lo flows. After the electric discharge current lo flows, the voltage application circuit 11 reduces the application voltage Vo to interrupt the electric discharge current lo. That is, after the load 2 is electrically discharged, the voltage application circuit 11 reduces the application voltage Vo to extinguish the electric discharge current lo (for example, the electric discharge current lo is caused to be gone out). Then, the voltage application circuit 11 increases the application voltage Vo with time and repeats the above operation.

In the present embodiment, when the load 2 is discharging, the voltage application circuit 11 performs constant current control for controlling the output so that the electric discharge current lo matches a target current value. The voltage application circuit 11 can control the magnitude of the electric discharge current lo by making the target current value variable.

As described above, the functional substance generation device E1 generates the radicals and electrostatically atomizes the liquid L1 held by the discharge electrode 21 by causing the electric discharge between the discharge electrode 21 and the counter electrode 22. Thus, the functional substance generation device E1 generates the charged fine particle liquid (for example, charged fine particle water) of nanometer size, the charged fine particle liquid containing the radicals in the fine droplets of the liquid L1 which has been electrostatically atomized. That is, the functional substance generation device E1 generates the functional substance (for example, the radicals and the charged fine particle liquid) by causing the electric discharge between the discharge electrode 21 and the counter electrode 22.

As described above, the voltage application circuit 11 of the functional substance generation device E1 applies the application voltage Vo between the discharge electrode 21 and the counter electrode 22 to allow the electric discharge between the discharge electrode 21 and the counter electrode 22, and adjusts the electric discharge current lo that is a current flowing between the discharge electrode 21 and the counter electrode 22, thereby generating the functional substance. There is a correlation between the electric discharge current lo and the generation amount of the functional substance. When the electric discharge current lo increases, the generation amount of the functional substance increases. When the electric discharge current lo decreases, the generation amount of the functional substance decreases. That is, the voltage application circuit 11 can control the generation amount of the functional substance by making the target current value variable.

The signal input unit 14 includes a first input circuit 141 and a second input circuit 142. The first input circuit 141 receives the first control signal Y1 from the signal generation unit 4. The second input circuit 142 receives the second control signal Y2 from the signal generation unit 4. The voltage application circuit 11 adjusts the electric discharge current lo based on the first control signal Y1 and the second control signal Y2 to control the generation amount of the functional substance.

### (2.2.4) Signal Generating Unit

The signal generation unit 4 generates the first control signal Y1 and the second control signal Y2 based on the operation state of the air conditioner 5 and the operation state of the operation unit 6. Each of the first control signal Y1 and the second control signal Y2 is a binary voltage signal or a binary current signal that is set to be switchable between a high level (hereinafter referred to as "H level") and a low level (hereinafter referred to as "L level"). Specifically, when the first control signal Y1 and the second control signal Y2 are voltage signals, the H level is, for example, 5V, and the L level is, for example, 0V.

The voltage application circuit 11 adjusts the electric discharge current lo based on the combination of the respective levels of the first control signal Y1 and the second control signal Y2, thereby controlling the generation amount of the functional substance.

### (2.2.5) Electric discharge sound

Since the functional substance generation device E1 generates the functional substance by using the electric discharge, the electric discharge sound is generated when the functional substance is generated. A person (for example, an occupant) in the vehicle interior 92 may feel that the electric discharge sound generated by the functional substance generation device E1 is annoying or bothersome.

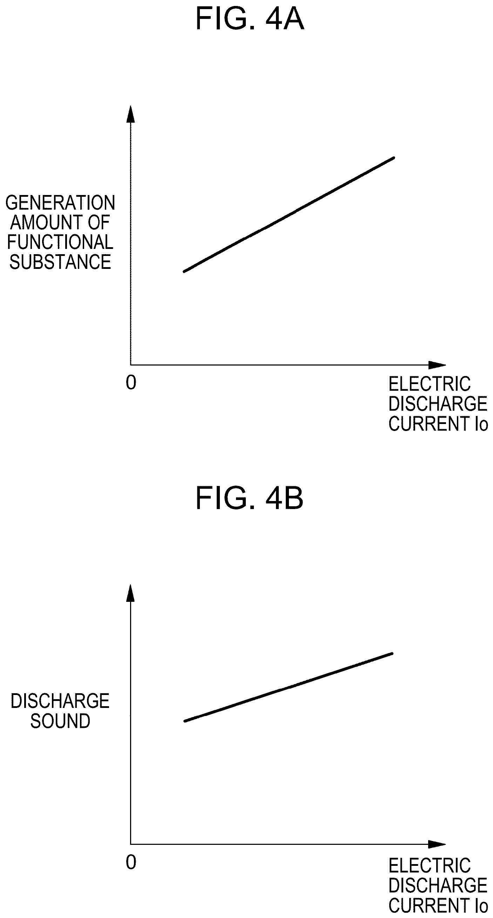

FIG. 4A is a graph showing a relationship between the electric discharge current lo and the generation amount of the functional substance in the functional substance generation device E1 according to the embodiment. FIG. 4B is a graph showing a relationship between the electric discharge current lo and the electric discharge sound in the functional substance generation device E1 according to the embodiment. As shown in FIG. 4A, there is a correlation between the electric discharge current lo and the generation amount of the functional substance. When the electric discharge current lo increases, the generation amount of the functional substance increases. When the electric discharge current lo decreases, the generation amount of the functional substance decreases.

As shown in FIG. 4B, there is a correlation between the electric discharge current lo and the volume of the electric discharge sound. When the electric discharge current lo increases, the volume of the electric discharge sound increases. When the electric discharge current lo decreases, the volume of the electric discharge sound decreases.

As described above, since there is a correlation between the electric discharge current lo and the generation amount of the functional substance and there is a correlation between the electric discharge current lo and the volume of the electric discharge sound, there is also a correlation between the generation amount of the functional substance and the volume of the electric discharge sound. That is, when the generation amount of the functional substance increases, the volume of the electric discharge sound increases. When the generation amount of the functional substance decreases, the volume of the electric discharge sound decreases. The correlation between the electric discharge current lo and the generation amount of the functional substance may be linear or nonlinear.

In the functional substance generation device E1 of the present embodiment, the voltage application circuit 11 adjusts the electric discharge current lo based on the control signal (specifically, the first control signal Y1 and the second control signal Y2) received by the signal input unit 14 from the signal generation unit 4. The functional substance generation device E1 controls the generation amount of the functional substance by adjusting the electric discharge current lo. The functional substance generation device E1 can vary the volume of the electric discharge sound by controlling the generation amount of the functional substance. That is, the functional substance generation device E1 can reduce the volume of the electric discharge sound as necessary based on the control signal received by the signal input unit 14.

### (3) Volume Adjustment of Electric discharge sound

Hereinafter, the volume adjustment of the electric discharge sound in the present embodiment will be described.

The signal generation unit 4 receives an air conditioning monitoring signal Ya from the air conditioner 5 and receives an operation signal Yb from the operation unit 6. The signal generation unit 4 generates the first control signal Y1 and the second control signal Y2 based on the air conditioning monitoring signal Ya and the operation signal Yb.

The air conditioning monitoring signal Ya is a signal indicating the operating state of the air conditioner 5. In the present embodiment, the air conditioning monitoring signal Ya is a signal indicating the operation/stop of the air conditioner 5 and an air flow rate. Specifically, the air conditioning monitoring signal Ya indicates whether the air conditioner 5 is in an operating state or a stopped state. Further, the air flow rate of the air conditioner 5 can be adjusted in three stages of "strong", "medium", and "weak", and the air conditioning monitoring signal Ya indicates whether the air flow rate of the air conditioner 5 is "strong", "medium", or "weak" when the air conditioner 5 is in the operating state.

The operation signal Yb is a signal indicating an operation state of the operation unit 6, and is a signal indicating an operation mode of the functional substance generation device E1 in the present embodiment. The operation mode of the functional substance generation device E1 is set by a person operating the operation unit 6. Specifically, the operation mode of the functional substance generation device E1 includes a normal mode and an electric discharge priority mode. The normal mode is an operation mode in which the generation amount of the functional substance is adjusted based on the air flow rate of the air conditioner 5, and the volume of the electric discharge sound is adjusted based on the air flow rate of the air conditioner 5. The electric discharge priority mode is an operation mode in which the generation amount of the functional substance is prioritized over the quietness. This operation mode is set by a person operating the operation unit 6, and the person sets the operation mode to be the normal mode or the electric discharge priority mode on their own will.

The signal generation unit 4 generates a first control signal Y1 and a second control signal Y2 based on the air conditioning monitoring signal Ya and the operation signal Yb. That is, the signal generation unit 4 sets the level of each of the first control signal Y1 and the second control signal Y2 in accordance with the operation state and the operation mode of the air conditioner 5. The first control signal Y1 is a control signal indicating operation/stop of the air conditioner 5, and is used to set whether or not the functional substance is allowed to be generated. The second control signal Y2 is a control signal generated in accordance with the air flow rate of the air conditioner 5 and the operation mode of the functional substance generation device E1, and is used to set the generation amount of the functional substance. The signal generation unit 4 sets the first control signal Y1 to the H level when the air conditioner 5 is in the operating state, and sets the first control signal Y1 to the L level when the air conditioner 5 is in the stopped state. The signal generation unit 4 sets the second control signal Y2 to the H level or the L level in accordance with the air flow rate of the air conditioner 5 and the operation mode of the functional substance generation device E1.

Table 1 below shows the correspondence between conditions indicating the operation state and the operation mode of the air conditioner 5 and the levels of the first control signal Y1 and the second control signal Y2.

**[Table 1]**

| Conditions | Y1 | Y2 | Generation Amount of Functional Substance |
|---|---|---|---|
| Air conditioner: Stop | L | L | None |
| Operation mode: Normal mode | | | |
| Air conditioner: Stop | L | H | None |
| Operation mode: Electric discharge priority mode | | | |
| Air conditioner: operation "weak" | H | L | Small |
| Operation mode: Normal mode | | | |
| Air conditioner: operation "strong" or "medium" | H | H | Large |
| Operation mode: Normal mode | | | |
| Air conditioner: operation "strong", "medium" or "weak" | H | H | Large |
| Operation mode: Electric discharge priority mode | | | |

In a condition where the air conditioner 5 is in the stopped state and where the operation mode is the normal mode, the first control signal Y1 is set to the L level and the second control signal Y2 is set to the L level. When the air conditioner 5 is stopped and the operation mode of the functional substance generation device E1 is the electric discharge priority mode, the first control signal Y1 is set to the L level and the second control signal Y2 is set to the H level. That is, when the air conditioner 5 is in the stopped state, the first control signal Y1 is set to the L level regardless of the operation mode of the functional substance generation device E1.

In a condition where the air conditioner 5 is in the operating state, where the air flow rate is "weak", and where the operation mode of the functional substance generation device E1 is the normal mode, the first control signal Y1 is set to the H level, and the second control signal Y2 is set to the L level. When the air conditioner 5 is in operation, the air flow rate is "high" or "medium", and the operation mode of the functional substance generation device E1 is the normal mode, the first control signal Y1 is set to the H level, and the second control signal Y2 is set to the H level. That is, when the air conditioner 5 is in the operating state and the operation mode of the functional substance generation device E1 is the normal mode, the second control signal Y2 is set to the H level or the L level in accordance with the air flow rate of the air conditioner 5.

In a condition where the air conditioner 5 is in the operating state, where the air flow rate is "strong", "medium", or "weak", and where the operation mode of the functional substance generation device E1 is the electric discharge priority mode, the first control signal Y1 is set to the H level, and the second control signal Y2 is set to the H level. That is, when the operation mode of the functional substance generation device E1 is the electric discharge priority mode, the second control signal Y2 is set to the H level regardless of the air flow rate of the air conditioner 5.

As described above, the signal generation unit 4 sets the levels of the first control signal Y1 and the second control signal Y2 in accordance with the operation state of the air conditioner 5 and the operation mode of the functional substance generation device E1. Then, the signal generation unit 4 outputs the first control signal Y1 and the second control signal Y2 to the signal input unit 14.

The signal input unit 14 includes the first input circuit 141 and the second input circuit 142. The first input circuit 141 receives the first control signal Y1 from the signal generation unit 4. The second input circuit 142 receives the second control signal Y2 from the signal generation unit 4. The signal input unit 14 outputs the first control signal Y1 and the second control signal Y2 to the drive circuit 111 of the voltage application circuit 11.

The drive circuit 111 adjusts the electric discharge current lo by driving the voltage generation circuit 112 based on the combination of the respective levels of the first control signal Y1 and the second control signal Y2. Specifically, the drive circuit 111 sets the target current value of the electric discharge current lo to be one of a first target current value lo1, a second target current value Io2, and a third target current value lo3 based on the combination of the respective levels of the first control signal Y1 and the second control signal Y2. That is, the drive circuit 111 adjusts the electric discharge current lo to one of the first target current value lo1, the second target current value Io2, and the third target current value Io3 based on the combination of the respective levels of the first control signal Y1 and the second control signal Y2. The first target current value lo1 is larger than the second target current value Io2. The second target current value lo2 is larger than the third target current value lo3. In the present embodiment, the third target current value lo3 is 0 (that is, zero). That is, the magnitude relationship among the first target current value Io1, the second target current value Io2, and the third target current value Io3 is Io1 >Io2>Io3, and lo3=0 (that is, zero).

As the target current value increases, the generation amount of the functional substance by using the load 2 increases. As the target current value decreases, the generation amount of the functional substance by using the load 2 decreases. As the target current value increases, the volume of the electric discharge sound increases. As the target current value decreases, the volume of the electric discharge sound decreases.

The drive circuit 111 reduces the target current value as necessary to reduce the generation amount of the functional substance. Thus, the drive circuit 111 reduces the electric discharge sound.

Specifically, as shown in Table 1, when the first control signal Y1 is set to the L level, the drive circuit 111 sets the electric discharge current lo to the third target current value Io3 (=0) regardless of the level of the second control signal Y2, and does not generate the functional substance. At this time, since the load 2 is not electrically discharged, no electric discharge sound is generated. That is, when the air conditioner 5 is in the stopped state, the voltage application circuit 11 does not generate the electric discharge sound by setting the generation amount of the functional substance to be none (that is, zero) regardless of the operation mode of the functional substance generation device E1.

When the first control signal Y1 is set to the H level and the second control signal Y2 is set to the H level, the drive circuit 111 sets the electric discharge current lo to the first target current value and sets the generation amount of the functional substance to be "large". In this case, the air flow rate of the air conditioner 5 is "high" or "medium", or the operation mode of the functional substance generation device E1 is the electric discharge priority mode. Since the electric discharge current lo is the first target current value, the generation amount of the functional substance increases, and the volume of the electric discharge sound increases. However, when the air flow rate of the air conditioner 5 is "high" or "medium", the operation sound of the air conditioner 5 also becomes louder (that is, the operation sound becomes louder than the operation sound when the air flow rate is "low"). Therefore, the electric discharge sound is mixed in the operation sound of the air conditioner 5 and is difficult for a person to hear. In addition, when the operation mode of the functional substance generation device E1 is the electric discharge priority mode, since the generation amount of the functional substance is selected to be prioritized over the quietness in accordance with the intention of the person, the person is more likely to tolerate the electric discharge sound not only when the air flow rate of the air conditioner 5 is "strong" or "medium" but also when the air flow rate of the air conditioner 5 is "weak".

On the other hand, when the first control signal Y1 is set to the H level and the second control signal Y2 is set to the L level, the drive circuit 111 sets the electric discharge current lo to the second target current value to set the generation amount of the functional substance to be "small". In this case, the air flow rate of the air conditioner 5 is "low", and the operation mode of the functional substance generation device E1 is the normal mode. Since the air flow rate of the air conditioner 5 is "low", the operation sound of the air conditioner 5 is small (that is, smaller than the operation sound when the air flow rate is "high"). However, since the electric discharge current lo is the second target current value and the generation amount of the functional substance is small, the electric discharge sound is small. Therefore, it is possible to prevent a person from feeling that the electric discharge sound is annoying or bothersome.

As described above, the voltage application circuit 11 controls the generation amount of the functional substance by adjusting the electric discharge current lo based on the first control signal Y1 and the second control signal Y2.

Specifically, the first control signal Y1 and the second control signal Y2 are signals based on the operating state of the air conditioner 5. The voltage application circuit 11 adjusts the electric discharge current lo in accordance with the first control signal Y1 and the second control signal Y2, thereby controlling the generation amount of the functional substance in accordance with the operation state of the air conditioner 5.

The second control signal Y2 is also a signal reflecting an operation mode based on an operation by a person. The voltage application circuit 11 adjusts the electric discharge current lo in accordance with the second control signal Y2, thereby controlling the generation amount of the functional substance in accordance with the operation by a person.

Therefore, based on the operating state of the air conditioner 5, the functional substance generation device E1 can determine whether or not to reduce the volume of the electric discharge sound and to achieve silence, and can reduce the volume of the electric discharge sound as necessary. In addition, based on an operation of a person (in a precise sense, the operation mode of the functional substance generation device E1), the functional substance generation device E1 can determine whether or not to reduce the volume of the electric discharge sound to achieve silence and can reduce the volume of the electric discharge sound as necessary. That is, the functional substance generation device E1 can suppress the volume of the electric discharge sound so as to be a volume tolerable for a person as necessary.

For example, when the air flow rate of the air conditioner 5 for diffusing the functional substance generated by the functional substance generation device E1 into the vehicle interior 92 of the vehicle C1 is "strong" or "medium", since the electric discharge sound is mixed in the operation sound of the air conditioner 5, the electric discharge sound is less likely to be annoying. Therefore, the generation amount of the functional substance is prioritized over the quietness, and the generation amount of the functional substance can be increased. In addition, when the air flow rate of the air conditioner 5 is "weak", the electric discharge sound is more likely to be annoying, and thus it is possible to suppress the electric discharge sound to a volume tolerable for a person by prioritizing the quietness over the generation amount of the functional substance. In addition, when the operation mode is the electric discharge priority mode, since the generation amount of the functional substance is selected to be prioritized over the quietness in accordance with an intension of a person, the generation amount of the functional substance can be prioritized over the quietness, and the generation amount of the functional substance increases.

Further, the functional substance generation device E1 can perform a volume adjustment processing of the electric discharge sound with a simple configuration based on the combination of the two control signals (that is, the first control signal Y1 and the second control signal Y2).

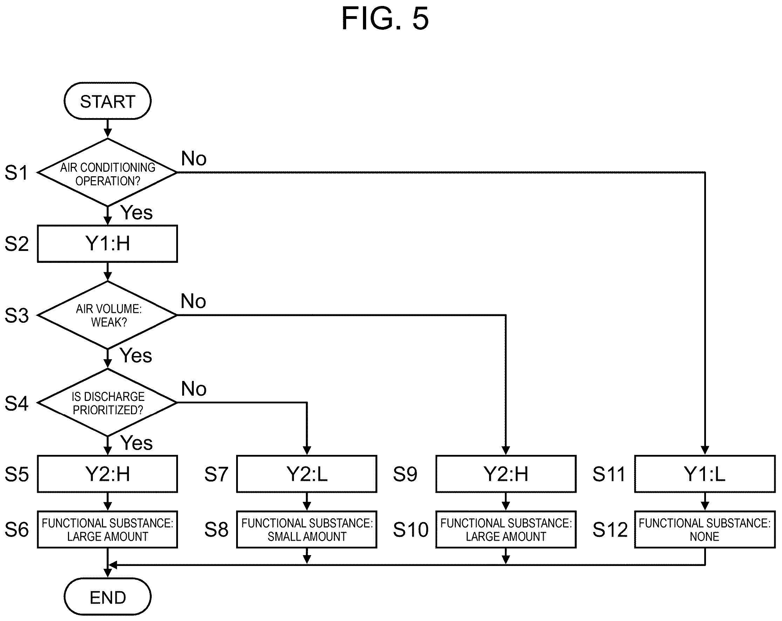

The volume adjustment processing of the electric discharge sound described above is summarized in the flowchart of FIG. 5. FIG. 5 is a flowchart showing a volume adjustment process of the electric discharge sound in the functional substance generation device E1 according to the embodiment.

First, the signal generation unit 4 determines whether or not the air conditioner 5 is in the operating state (step S1). If the air conditioner 5 is in the operation state, the first control signal Y1 is set to the H level (step S2). Then, the signal generation unit 4 determines whether or not the air blowing amount of the air conditioner 5 is "weak" (step S3). If the air flow rate of the air conditioner 5 is "weak", the signal generation unit 4 determines whether or not the operation mode of the functional substance generation device E1 is the electric discharge priority mode (step S4). When the operation mode of the functional substance generation device E1 is the electric discharge priority mode, the signal generation unit 4 sets the second control signal Y2 to the H level (step S5). After proceeding to the step S5, the signal generation unit 4 outputs the first control signal Y1 of the H level and the second control signal Y2 of the H level to the functional substance generation device E1. Upon receiving the first control signal Y1 of the H level and the second control signal Y2 of the H level, the functional substance generation device E1 sets the generation amount of the functional substance to be "large" (step S6).

In the step S4, when the operation mode of the functional substance generation device E1 is not the electric discharge priority mode but the normal mode, the signal generation unit 4 sets the second control signal Y2 to the L level (step S7). After proceeding to the step S7, the signal generation unit 4 outputs the first control signal Y1 of the H level and the second control signal Y2 of the L level to the functional substance generation device E1. Upon receiving the first control signal Y1 of the H level and the second control signal Y2 of the L level, the functional substance generation device E1 reduces the volume of the electric discharge sound by reducing the generation amount of the functional substance (step S8).

In the step S3, if the air flow rate of the air conditioner 5 is not "weak" but "strong" or "medium", the signal generation unit 4 sets the second control signal Y2 to the H level (step S9). After proceeding to the step S9, the signal generation unit 4 outputs the first control signal Y1 of the H level and the second control signal Y2 of the H level to the functional substance generation device E1. Upon receiving the first control signal Y1 of the H level and the second control signal Y2 of the H level, the functional substance generation device E1 sets the generation amount of the functional substance to be "large" (step S10).

In the step S1, when the air conditioner 5 is not in the operating state but in the stopped state, the signal generation unit 4 sets the first control signal Y1 to the L level (step S11). At this time, the signal generation unit 4 sets the second control signal Y2 to a level (that is, the H level or the L level) in accordance with the operation mode. After proceeding to the step S11, the signal generation unit 4 outputs the first control signal Y1 of the L level and the second control signal Y2 of the H level or the L level to the functional substance generation device E1. Upon receiving the first control signal Y1 of the H level, the functional substance generation device E1 sets the generation amount of the functional substance to be "none" regardless of the level of the second control signal Y2 (step S12).

### (4) First Modification

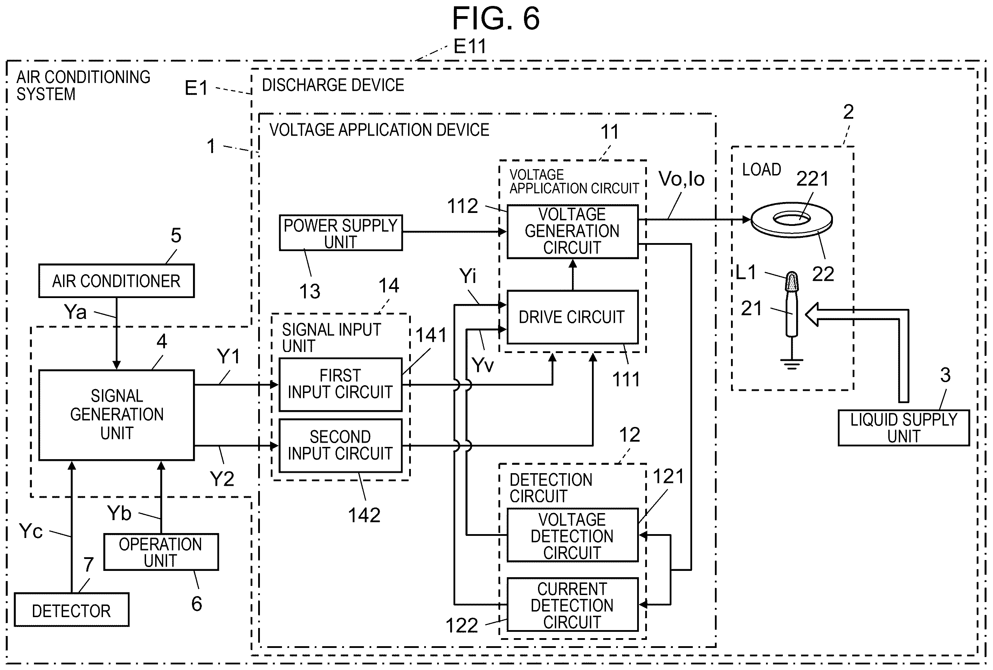

FIG. 6 is a block diagram illustrating an air conditioning system E11 according to a first modification.

The air conditioning system E11 further includes a detection unit 7. The detection unit 7 generates a vehicle detection signal Yc and outputs the vehicle detection signal Yc to the signal generation unit 4. The vehicle detection signal Yc is a signal based on at least one of a state of a person in the vehicle C1 or a state of the vehicle C1. The voltage application circuit 11 of the functional substance generation device E1 controls the generation amount of the functional substance in accordance with at least one of the state of the person in the vehicle C1 or the state of the vehicle C1. The vehicle C1 corresponds to the target space.

The detection unit 7 includes at least one of a radio wave sensor, a pressure sensor, a human sensor, an infrared sensor, or a camera device in order to detect a state of a person in the vehicle C1. Then, the detection unit 7 detects at least one of the number of persons in the vehicle C1 (for example, the number of occupants), the heart rate, the respiratory rate, or the motion as the state of the person in the vehicle C1. In addition, the detection unit 7 includes a speed sensor, an acceleration sensor, or a gyroscope sensor in order to detect the state of the vehicle C1. The detection unit 7 detects the speed, acceleration, or posture of the vehicle C1 as the state of the vehicle C1. That is, the vehicle detection signal Yc is a signal indicating at least one of the number of persons in the vehicle C1 (for example, the number of occupants), the heart rate of the persons, the respiratory rate of the persons, the body temperature of the persons, or the motion of the persons as the state of the persons in the vehicle C1, and indicating the speed, the acceleration, or the posture of the vehicle C1 as the state of the vehicle C1.

The signal generation unit 4 generates the first control signal Y1 and the second control signal Y2 based on at least one of the state of the person in the vehicle C1 or the state of the vehicle C1, the operation state of the air conditioner 5, and the operation state of the operation unit 6. The voltage application circuit 11 adjusts the electric discharge current lo based on the combination of the respective levels of the first control signal Y1 and the second control signal Y2, thereby controlling the generation amount of the functional substance.

Hereinafter, as the volume adjustment of the electric discharge sound in the first modification, (4.1) volume adjustment of the electric discharge sound in accordance with the number of occupants of the vehicle and (4.2) volume adjustment of the electric discharge sound in accordance with the speed of the vehicle will be exemplified.

### (4.1) Adjustment of Volume of Electric discharge sound in accordance with Number of Occupants of Vehicle

In this example, the detection unit 7 detects the number of occupants, which is the number of persons in the vehicle C1, as the state of persons in the vehicle C1.

The signal generation unit 4 receives the air conditioning monitoring signal Ya from the air conditioner 5, receives the operation signal Yb from the operation unit 6, and receives the vehicle detection signal Yc from the detection unit 7.

The air conditioning monitoring signal Ya is a signal indicating the operating state of the air conditioner 5. Specifically, the air conditioning monitoring signal Ya is a signal indicating the operation/stop of the air conditioner 5.

The operation signal Yb is a signal indicating an operation state of the operation unit 6. Specifically, the operation signal Yb is a signal indicating an operation mode of the functional substance generation device E1. The operation mode of the functional substance generation device E1 is set by a person operating the operation unit 6. The operation mode of the functional substance generation device E1 is set to the normal mode or the electric discharge priority mode as in the above-described embodiment.

The vehicle detection signal Yc is a signal indicating a state of a person in the vehicle C1. Specifically, the vehicle detection signal Yc is a signal indicating the number of occupants in the vehicle C1. In other words, the vehicle detection signal Yc is a signal indicating a headcount of an occupant in the vehicle C1.

The signal generation unit 4 generates the first control signal Y1 and the second control signal Y2 based on the operation/stop of the air conditioner 5 (that is, the operation state of the air conditioner 5), the operation mode of the functional substance generation device E1 (that is, the operation state of the operation unit 6), and the number of occupants (that is, an example of the state of a person in the vehicle C1). Specifically, the signal generation unit 4 sets the first control signal Y1 to the H level when the air conditioner 5 is in the operating state, and sets the first control signal Y1 to the L level when the air conditioner 5 is in the stopped state. The signal generation unit 4 sets the second control signal Y2 to the H level or the L level in accordance with the number of occupants of the vehicle C1 and the operation mode of the functional substance generation device E1.

Table 2 shows the correspondence between the conditions indicating the operation/stop of the air conditioner 5, the operation mode of the air conditioner 5, and the number of occupants of the vehicle C1, and the levels of the first control signal Y1 and the second control signal Y2.

**[Table 2]**

| Conditions | Y1 | Y2 | Amount of Functional Substance Generated |
|---|---|---|---|
| Air Conditioner: Stop | L | - | None |
| Operation Mode: Normal Mode or Electric discharge priority mode | | | |
| Occupant number: 0 person or 1 person or a plurality of persons | | | |
| AIR CONDITIONER: Operation | H | L | Small |
| Operation Mode: Normal Mode | | | |
| Occupant number: 0 person | | | |
| AIR CONDITIONER: Operation | H | H | Large |
| Operation mode: Electric discharge priority mode | | | |
| Occupant number: 0 person | | | |
| AIR CONDITIONER: Operation | H | L | Small |
| Operation Mode: Normal Mode or Electric discharge priority mode | | | |
| Occupant number: 1 person | | | |
| AIR CONDITIONER: Operation | H | H | Large |
| Operation Mode: Normal Mode or Electric discharge priority mode | | | |
| Occupant number: a plurality of persons | | | |

In a condition where the air conditioner 5 is in the stopped state, the first control signal Y1 is set to the L level and the second control signal Y2 is set to the initial value (that is, the H level or the L level) regardless of the operation mode and the number of occupants.

In a condition where the air conditioner 5 is in the operating state, where the operation mode of the functional substance generation device E1 is the normal mode, and where the number of occupants is zero, the first control signal Y1 is set to the H level, and the second control signal Y2 is set to the L level. When the air conditioner 5 is in the operating state, the operation mode of the functional substance generation device E1 is the electric discharge priority mode, and the number of occupants is zero, the first control signal Y1 is set to the H level, and the second control signal Y2 is set to the H level. That is, when the air conditioner 5 is in the operating state and the number of occupants is zero, the second control signal Y2 is set to the H level or the L level in accordance with the operation mode of the functional substance generation device E1.

In a condition where the air conditioner 5 is in an operating state, where the operation mode of the functional substance generation device E1 is the normal mode or the electric discharge priority mode, and where the number of occupants is one, the first control signal Y1 is set to the H level, and the second control signal Y2 is set to the L level. That is, when the air conditioner 5 is in the operating state and the number of occupants is one, the second control signal Y2 is set to the L level regardless of the operation mode of the functional substance generation device E1.

In a condition where the air conditioner 5 is in the operating state, the operation mode of the functional substance generation device E1 is the normal mode or the electric discharge priority mode, and where the number of occupants is plural, the first control signal Y1 is set to the H level, and the second control signal Y2 is set to the H level. That is, when the air conditioner 5 is in the operating state and the number of occupants is plural, the second control signal Y2 is set to the H level regardless of the operation mode of the functional substance generation device E1.

As described above, the signal generation unit 4 sets the respective levels of the first control signal Y1 and the second control signal Y2 in accordance with the operation/stop of the air conditioner 5, the operation mode of the functional substance generation device E1, and the number of occupants. Then, the signal generation unit 4 outputs the first control signal Y1 and the second control signal Y2 to the signal input unit 14. The signal input unit 14 outputs the first control signal Y1 and the second control signal Y2 received from the signal generation unit 4 to the drive circuit 111 of the voltage application circuit 11.

The drive circuit 111 adjusts the electric discharge current lo by driving the voltage generation circuit 112 based on the combination of the respective levels of the first control signal Y1 and the second control signal Y2.

Specifically, as shown in Table 2, when the first control signal Y1 is set to the L level, the drive circuit 111 sets the electric discharge current lo to the third target current value Io3 (=0) regardless of the level of the second control signal Y2, and does not generate the functional substance. At this time, since the load 2 is not electrically discharged, no electric discharge sound is generated. That is, when the air conditioner 5 is in the stopped state, the voltage application circuit 11 does not generate the electric discharge sound by setting the generation amount of the functional substance to none (that is, zero) regardless of the operation mode of the functional substance generation device E1 and the number of occupants of the vehicle C1.

When the first control signal Y1 is set to the H level and the second control signal Y2 is set to the H level, the drive circuit 111 sets the electric discharge current lo to the first target current value and sets the generation amount of the functional substance to "large". In this case, the number of occupants is plural. Alternatively, in this case, the number of occupants is zero, and the operation mode of the functional substance generation device E1 is the electric discharge priority mode. Since the electric discharge current lo is the first target current value and the generation amount of the functional substance is large, the volume of the electric discharge sound increases. However, when the number of occupants is plural, voice in the vehicle C1 also becomes louder (that is, voice becomes louder than the voice when the number of occupants is one) due to conversation between the persons in the vehicle C1, and thus the electric discharge sound is mixed in the voice and is difficult for the persons to hear. When the number of occupants is zero and the operation mode of the functional substance generation device E1 is the electric discharge priority mode, there is no occupant in the vehicle C1, and thus there is no influence of the electric discharge sound on a person. Further, although the vehicle interior 92 is unmanned, the electric discharge priority mode is selected in accordance with an intention of a person for the reason that the air conditioner 5 is operated in advance before the next boarding and that a large amount of the functional substance is generated in the vehicle interior 92. Thus, the functional substance is effectively used in the vehicle C1 before the person boards the vehicle C1.

On the other hand, when the first control signal Y1 is set to the H level and the second control signal Y2 is set to the L level, the drive circuit 111 sets the electric discharge current lo to the second target current value, and sets the generation amount of the functional substance to be "small". In this case, the number of occupants is one. Alternatively, the number of occupants is zero, and the operation mode of the functional substance generation device E1 is the normal mode. When the number of occupants is one, the voice in the vehicle C1 becomes small (that is, the voice becomes smaller than the voice when the number of occupants is plural). However, since the electric discharge current lo is the second target current value and the generation amount of the functional substance is small, the volume of the electric discharge sound becomes small. Therefore, it is possible to prevent a person from feeling that the electric discharge sound is annoying or bothersome. When the number of occupants is zero and the operation mode of the functional substance generation device E1 is the normal mode, it is not necessary to generate a large amount of the functional substance.

As described above, the voltage application circuit 11 controls the generation amount of the functional substance by adjusting the electric discharge current lo based on the first control signal Y1 and the second control signal Y2.

Specifically, the first control signal Y1 and the second control signal Y2 are signals based on the operating state of the air conditioner 5 and the number of occupants in the vehicle C1 (here, the number of occupants is an example of the state of persons in the vehicle C1). The voltage application circuit 11 adjusts the electric discharge current lo in accordance with the first control signal Y1 and the second control signal Y2, thereby controlling the generation amount of the functional substance in accordance with the operation state of the air conditioner 5 and the number of occupants in the vehicle C1.

The second control signal Y2 is also a signal reflecting an operation mode based on an operation by a person. The voltage application circuit 11 adjusts the electric discharge current lo in accordance with the second control signal Y2, thereby controlling the generation amount of the functional substance in accordance with the human operation.

Therefore, the functional substance generation device E1 can determine whether or not to reduce the volume of the electric discharge sound to achieve silence based on the operating state of the air conditioner 5, and reduce the volume of the electric discharge sound as necessary. In addition, the functional substance generation device E1 can determine whether or not to reduce the volume of the electric discharge sound to achieve silence based on an operation by a person, and reduce the volume of the electric discharge sound as necessary. In addition, the functional substance generation device E1 can determine whether or not to reduce the volume of the electric discharge sound to achieve silence based on the number of occupants, and reduce the volume of the electric discharge sound as necessary. That is, the functional substance generation device E1 can suppress the volume of the electric discharge sound to a level tolerable for a person as necessary.

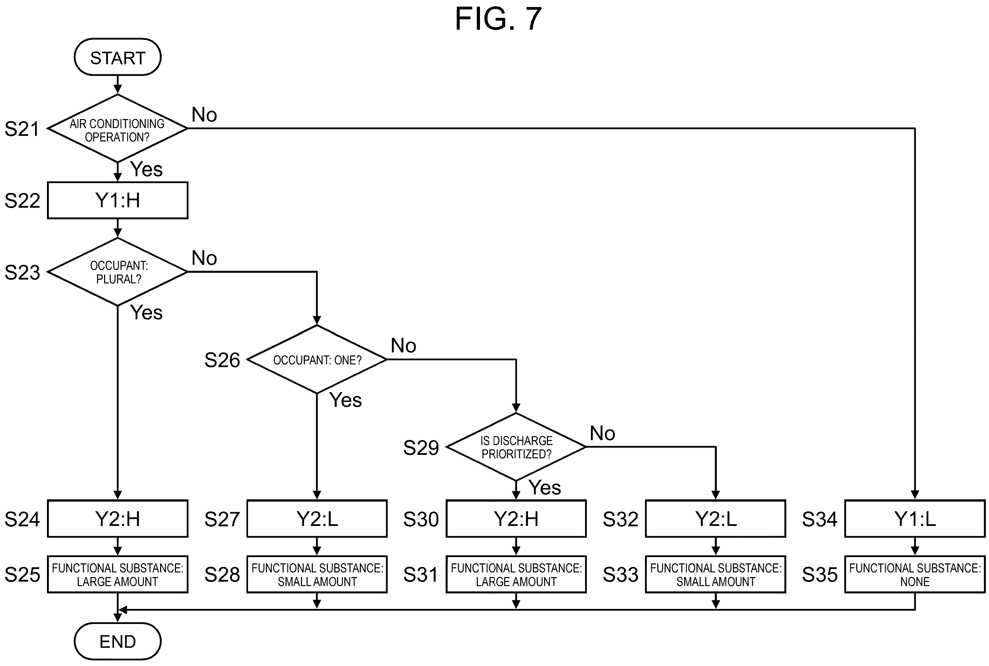

The volume adjustment processing of the electric discharge sound described above is summarized in the flowchart of FIG. 7. FIG. 7 is a flowchart showing a volume adjustment process of the electric discharge sound in the functional substance generation device E1 according to the first modification.

First, the signal generation unit 4 determines whether or not the air conditioner 5 is in the operating state (step S21). If the air conditioner 5 is in operation, the first control signal Y1 is set to the H level (step S22). Then, the signal generation unit 4 determines whether or not the number of occupants in the vehicle C1 is "plural" (step S23). When the number of occupants in the vehicle C1 is "plural", the signal generation unit 4 sets the second control signal Y2 to the H level (step S24). After proceeding to the step S24, the signal generation unit 4 outputs the first control signal Y1 of the H level and the second control signal Y2 of the H level to the functional substance generation device E1. Upon receiving the first control signal Y1 of the H level and the second control signal Y2 of the H level, the functional substance generation device E1 sets the generation amount of the functional substance to be "large" (step S25).

When the number of occupants of the vehicle C1 of the functional substance generation device E1 is not "plural" in the step S23, the signal generation unit 4 determines whether or not the number of occupants of the vehicle C1 is "one" (step S26). When the number of occupants in the vehicle C1 is "one", the signal generation unit 4 sets the second control signal Y2 to the L level (step S27). After proceeding to the step S27, the signal generation unit 4 outputs the first control signal Y1 of the H level and the second control signal Y2 of the L level to the functional substance generation device E1. Upon receiving the first control signal Y1 of the H level and the second control signal Y2 of the L level, the functional substance generation device E1 reduces the volume of the electric discharge sound by reducing the generation amount of the functional substance (step S28).

If the number of occupants of the vehicle C1 of the functional substance generation device E1 is not "one" in the step S26, the signal generation unit 4 recognizes that the number of occupants of the vehicle C1 is "zero", and determines whether or not the operation mode is the electric discharge priority mode (step S29). When the operation mode is the electric discharge priority mode, the signal generation unit 4 sets the second control signal Y2 to the H level (step S30). After proceeding to the step S30, the signal generation unit 4 outputs the first control signal Y1 of the H level and the second control signal Y2 of the H level to the functional substance generation device E1. Upon receiving the first control signal Y1 of the H level and the second control signal Y2 of the H level, the functional substance generation device E1 sets the generation amount of the functional substance to be "large" (step S31).

In the step S29, when the operation mode is not the electric discharge priority mode but the normal mode, the signal generation unit 4 sets the second control signal Y2 to the L level (step S32). After proceeding to the step S32, the signal generation unit 4 outputs the first control signal Y1 of the H level and the second control signal Y2 of the L level to the functional substance generation device E1. Upon receiving the first control signal Y1 of the H level and the second control signal Y2 of the L level, the functional substance generation device E1 reduces the volume of the electric discharge sound by reducing the generation amount of the functional substance (step S33).

In step S21, when the air conditioner 5 is not in the operating state but in the stopped state, the signal generation unit 4 sets the first control signal Y1 to the L level and sets the second control signal Y2 to the initial value (i.e., the H level or the L level) (step S34). After proceeding to the step S34, the signal generation unit 4 outputs the first control signal Y1 of the L level and the second control signal Y2 of the initial value to the functional substance generation device E1. Upon receiving the first control signal Y1 at the H level, the functional substance generation device E1 sets the generation amount of the functional substance to "none" regardless of the level of the second control signal Y2 (step S35).

### (4.2) Volume Adjustment of Electric discharge sound in accordance with Vehicle Speed

In this example, the detection unit 7 detects the speed of the vehicle C1 as the state of the vehicle C1.

The signal generation unit 4 receives the air conditioning monitoring signal Ya from the air conditioner 5, receives the operation signal Yb from the operation unit 6, and receives the vehicle detection signal Yc from the detection unit 7. The air conditioning monitoring signal Ya and the operation signal Yb are the same as those in (4.1), which have been described above. The vehicle detection signal Yc is a signal indicating the state of the vehicle C1. Specifically, the vehicle detection signal Yc is a signal indicating the speed of the vehicle C1.

The signal generation unit 4 generates the first control signal Y1 and the second control signal Y2 based on the operation/stop of the air conditioner 5 (that is, the operation state of the air conditioner 5), the operation mode of the functional substance generation device E1 (that is, the operation state of the operation unit 6), and the speed of the vehicle C1 (that is, an example of the state of the vehicle C1). Specifically, the signal generation unit 4 sets the first control signal Y1 to the H level when the air conditioner 5 is in the operating state, and sets the first control signal Y1 to the L level when the air conditioner 5 is in the stopped state. The signal generation unit 4 sets the second control signal Y2 to the H level or the L level in accordance with the speed of the vehicle C1 and the operation mode of the functional substance generation device E1.

For example, when the operation mode is the normal mode and the speed of the vehicle C1 is equal to or higher than the threshold value, the signal generation unit 4 sets the second control signal Y2 to the H level. When the first control signal Y1 is set to the H level and the second control signal Y2 is set to the H level, the drive circuit 111 sets the generation amount of the functional substance to be "large". In this case, since the generation amount of the functional substance is large, the volume of the electric discharge sound is increased. However, when the speed of the vehicle C1 is equal to or higher than the threshold value, the traveling sound of the vehicle C1 becomes loud, and thus the electric discharge sound is mixed in the traveling sound and is difficult for a person to hear, and the person is more likely to tolerate the electric discharge sound.

When the operation mode is the normal mode and the speed of the vehicle C1 is less than the threshold value, the signal generation unit 4 sets the second control signal Y2 to the L level. When the first control signal Y1 is set to the H level and the second control signal Y2 is set to the L level, the drive circuit 111 sets the generation amount of the functional substance to be "small". In this case, the traveling sound of the vehicle C1 is reduced, but the volume of the electric discharge sound is also reduced because the generation amount of the functional substance is small. Therefore, it is difficult for a person to hear the electric discharge sound, and the person is more likely to tolerate the electric discharge sound.

When the operation mode is the electric discharge priority mode, the signal generation unit 4 sets the second control signal Y2 to the H level. When the first control signal Y1 is set to the H level and the second control signal Y2 is set to the H level, the drive circuit 111 sets the generation amount of the functional substance to be "large". In this case, since the generation amount of the functional substance is prioritized over the quietness in accordance with the intention of a person, the person is more likely to tolerate the electric discharge sound.

In this way, the functional substance generation device E1 can determine whether or not to reduce the electric discharge sound to achieve silence based on the speed of the vehicle C1, and reduce the electric discharge sound as necessary.

### (5) Second Modification

The above-described operation signal Yb may be a signal indicating a setting result of the generation amount of the functional substance. The generation amount of the functional substance is set by a person operating the operation unit 6. In this case, the person can determine the generation amount of the functional substance on their own will. Thus, the person adjusts the electric discharge sound to a sound volume tolerable for the person or adjusts the generation amount of the functional substance to an amount necessary for the person.

For example, the generation amount of the functional substance can be set to "large" or "small" by operating the operation unit 6. In this case, the operation signal Yb indicates "large" or "small" as the setting result of the generation amount of the functional substance. When the setting result of the generation amount of the functional substance is "large", the signal generation unit 4 sets the second control signal Y2 to the H level. When the setting result of the generation amount of the functional substance is "small", the signal generation unit 4 sets the second control signal Y2 to the L level. The signal generation unit 4 sets the first control signal Y1 to the H level when the air conditioner 5 is in the operating state, and sets the first control signal Y1 to the L level when the air conditioner 5 is in the stopped state.

When the first control signal Y1 is set to the H level and the second control signal Y2 is set to the H level, the drive circuit 111 sets the generation amount of the functional substance to be "large". When the first control signal Y1 is of the H level and the second control signal Y2 is of the L level, the drive circuit 111 sets the generation amount of the functional substance to be "small".

As described above, the functional substance generation device E1 can determine whether or not to reduce the volume of the electric discharge sound to achieve silence based on the operation state of the operation unit 6, and can reduce the volume of the electric discharge sound as necessary.

Although the operation unit 6 is disposed in the vehicle interior 92 of the vehicle C1, the operation signal Yb may be transmitted to the signal generation unit 4 by operating an operation terminal outside the vehicle C1. In this case, the generation amount of the functional substance can be set by remote control using the operation terminal. The operation terminal is, for example, a smartphone, a tablet terminal, or a dedicated terminal.

### (6) Third Modification

The signal generation unit 4 may set the level of the second control signal Y2 based on the time measurement result of the timer. For example, the signal generation unit 4 sets the second control signal Y2 to the H level when the current time based on the time measurement result of the timer falls within a predetermined time period. The signal generation unit 4 sets the second control signal Y2 to the L level when the current time based on the time measurement result of the timer does not fall within the predetermined time zone.

The signal generation unit 4 sets the first control signal Y1 to the H level when the air conditioner 5 is in the operating state, and sets the first control signal Y1 to the L level when the air conditioner 5 is in the stopped state.

When the first control signal Y1 is set to the H level and the second control signal Y2 is set to the H level, the drive circuit 111 sets the generation amount of the functional substance to be "large". When the first control signal Y1 is set to the H level and the second control signal Y2 is set to the L level, the drive circuit 111 sets the generation amount of the functional substance to be "small".

In this manner, the functional substance generation device E1 can determine whether or not to reduce the volume of the electric discharge sound to achieve silence based on the current time (as an example, the time measurement result of the timer) and reduce the volume of the electric discharge sound as necessary. For example, when the air conditioner 5 is in operation and the current time falls within a predetermined time period, the functional substance generation device E1 sets the generation amount of the functional substance to be "large". When the air conditioner 5 is in operation and the current time does not fall within the predetermined time period, the functional substance generation device E1 reduces the generation amount of functional substance to be "low" to achieve silence.

### (7) Fourth Modification

The detection unit 7 may include at least one of an odor sensor, a PM2.5 sensor, an ozone sensor, a temperature sensor, a humidity sensor, or a CO₂ sensor. In this case, the signal generation unit 4 sets the level of the second control signal Y2 based on the detection result of the at least one of the odor sensor, the PM2.5 sensor, the ozone sensor, the temperature sensor, the humidity sensor, or the CO₂ sensor.

For example, when the detection result of the at least one of the odor sensor, the PM2.5 sensor, the temperature sensor, the humidity sensor, or the CO₂ sensor is equal to or greater than a threshold value, the second control signal Y2 is set to the H level, and the generation amount of the functional substance is set to be "large". On the other hand, if the at least one of the detection result is less than the threshold value, the second control signal Y2 is set to the L level, and the generation amount of the functional substance is set to be "small", thereby prioritizing quietness over the generation amount of the functional substance.

Alternatively, when the detection result of the ozone sensor is less than the threshold value, the second control signal Y2 is set to the H level, and the generation amount of the functional substance is set to be "large". On the other hand, if the detection result of the ozone sensor is equal to or greater than the threshold value, the second control signal Y2 is set to the L level, the generation amount of the functional substance is set to be "small", thereby prioritizing quietness over the generation amount of the functional substance.

### (8) Fifth Modification

The air conditioning systems E10 and E11 are not limited to those used in the vehicle C1. The air conditioning systems E10 and E11 may be used in facilities such as office buildings, offices, stores, factories, and commercial facilities. Alternatively, the air conditioning systems E10 and E11 may be used in a dwelling unit of an apartment house or a detached house. Further, the air conditioning systems E10 and E11 may be used in a target space where many people gather, such as an elevator, a train, an airplane, and a large room in a building.

The functional substance generation device E1 is not limited to a device used in the air conditioning systems E10 and E11. The functional substance generation device E1 may be used alone, or may be used in a system or apparatus other than the air conditioning systems E10 and E11.

Further, the configuration of the functional substance generation device E1 is not limited to the configuration in which the volume adjustment processing of the electric discharge sound is performed based on the combination of the two control signals (that is, the first control signal Y1 and the second control signal Y2). The functional substance generation device E1 may be configured to perform the volume adjustment processing of the electric discharge sound based on one control signal or a combination of three or more control signals.

The functional substance generation device E1 may be configured to adjust the generation amount of the functional substance in a stepwise manner or in a continuous manner.

The configuration of the functional substance generation device E1 is not limited to the configuration in which the electric discharge current lo is controlled to adjust the generation amount of the functional substance. The functional substance generation device E1 may be configured to adjust the generation amount of the functional substance by controlling at least one of the magnitude, frequency, or duty ratio of the application voltage Vo. Alternatively, the functional substance generation device E1 may be configured to adjust the generation amount of the functional substance by intermittently or randomly driving the electric discharge current lo or the application voltage Vo.

The functional substance generation device E1 may be configured to adjust the generation amount of the functional substance in accordance with the volume of voice or music in the target space on which the functional substance acts, the brightness of the target space, or the number of times of opening and closing a door provided in the target space such as an elevator or a train.

The functional substance generation device E1 may be configured to generate the functional substance not only when the air conditioner 5 is operating but also when the air conditioner 5 is stopped, and reduce the volume of the electric discharge sound as necessary.

When the functional substance generation device E1 is used in a target space where a large number of people gather, such as an elevator, a train, an airplane, or a large room in a building, it is preferable to set the threshold value to a predetermined number of two or more people. Then, when the number of persons in the target space is less than the threshold value, the functional substance generation device E1 sets the generation amount of the functional substance to be "small" to reduce the volume of the electric discharge sound to achieve silence. When the number of people in the target space is equal to or greater than the threshold value, the generation amount of the functional substance is set to be "large", and the generation amount of the functional substance is prioritized over quietness. The occupancy of the seat or the target space may be set as the threshold value.

Further, in the functional substance generation device E1, the counter electrode 22 may be omitted. In this case, the electric discharge occurs between the discharge electrode 21 and a member present around discharge electrode 21. An example of such a member is a housing. Further, in the functional substance generation device E1, both the liquid supply unit 3 and the counter electrode 22 may be omitted.

Further, the functional substance generation device E1 may be configured to set the generation amount of the functional substance in stages (for example, in three stages of "large", "medium", and "small"), or may be configured to set the generation amount of the functional substance in a stepless manner.

The voltage application device 1 preferably includes a computer system that executes a program to implement at least a part of the volume adjustment processing of the electric discharge sound described above. The computer system includes a processor that operates in accordance with a program as a main hardware configuration. The processor may be of any type, as long as the processor can realize functions by executing the program. The processor includes one or more electronic circuits including a semiconductor integrated circuit (i.e., an IC) or a large scale integration (i.e., LSI). Here, an IC or an LSI is used, but the name of the processor changes depending on the degree of integration of the processor. As the processor, a processor such as a system LSI, a very large scale integration (i.e., VLSI), or an ultra large scale integration (i.e., ULSI) may be used. For the same purpose as the above, a field programmable gate array (FPGA) and a reconfigurable logic device may be used, both of which are programmed after the manufacture thereof. In the reconfigurable logic device, reconfiguration of junction relationships within the LSI or setup of circuit sections within the LSI are allowed. The plurality of electronic circuits may be integrated on one chip or may be provided on a plurality of chips. The plurality of chips may be integrated into one device or may be provided in a plurality of devices. The program is recorded in a non-transitory recording medium such as a ROM, an optical disk, or a hard disk drive readable by the computer system. The program may be stored in a non-transitory recording medium in advance, or may be supplied to a non-transitory recording medium via a wide area network including the Internet.

The volume adjustment processing of the electric discharge sound described above may be embodied by a volume adjustment method of the electric discharge sound, a computer program, or a recording medium recording the computer program. That is, the function of the functional substance generation device E1 may be embodied by a method of adjusting the volume of electric discharge sound, a computer program, or a recording medium on which a computer program is recorded.

Furthermore, an example of the functional substance generation device E1 is an electrostatic atomizer. Another example of the functional substance generation device E1 is an ion generator.

### (9) Summary

A functional substance generation device (E1) of a first aspect according to the embodiment includes a discharge electrode (21), a voltage application circuit (11), and a signal input unit (14). The voltage application circuit (11) applies a voltage (Vo) to the discharge electrode (21) to allow the discharge electrode (21) to generate electric discharge. The voltage application circuit (11) adjusts an electric discharge current (lo) that is a current flowing through the discharge electrode (21). The signal input unit (14) receives control signals (Y1, Y2) for controlling the operation of the voltage application circuit (11). The voltage application circuit (11) controls a generation amount of the functional substance based on the control signals (Y1, Y2).

When quietness is required by the control signals (Y1, Y2), the above-described functional substance generation device (E1) can reduce the volume of the electric discharge sound by suppressing the generation amount of the functional substance. That is, the functional substance generation device (E1) can reduce the volume of the electric discharge sound as necessary.

In the functional substance generation device (E1) of a second aspect according to the embodiment, in the first aspect, the voltage application circuit (11) preferably controls the generation amount of the functional substance by adjusting the electric discharge current (lo) based on the control signals (Y1, Y2).

The above-described functional substance generation device (E1) can easily control the volume of the electric discharge sound by adjusting the electric discharge current (lo), which is correlated with the volume of the electric discharge sound.

In the functional substance generation device (E1) of a third aspect according to the embodiment, in the first or second aspect, the functional substance is preferably contained in air supplied from an air conditioner (5). The control signals (Y1, Y2) include a signal based on an operating state of the air conditioner (5). The voltage application circuit (11) controls the generation amount of the functional substance in accordance with the operating state of the air conditioner (5).

The functional substance generation device (E1) can control the volume of the electric discharge sound in accordance with the operating state of the air conditioner (5).

In the functional substance generation device (E1) of a fourth aspect according to the embodiment, in any one of the first to third aspects, the functional substance is preferably supplied to the target space. The control signal (Y2) includes a signal based on at least one of a state of a person in the target space or a state of the target space. The voltage application circuit (11) controls the generation amount of the functional substance in accordance with the at least one of the state of the person in the target space or the state of the target space.

The functional substance generation device (E1) can control the volume of the electric discharge sound in accordance with at least one of the state of the person in the vehicle (C1) or the state of the vehicle (C1).

In the functional substance generation apparatus (E1) of a fifth aspect according to the embodiment, in the fourth aspect, the target space is preferably a vehicle (C1), and the control signal (Y2) preferably includes a signal based on the number of occupants, which is the number of persons present in the vehicle (C1). The voltage application circuit controls the generation amount of the functional substance in accordance with the number of occupants.

The functional substance generation device (E1) can control the volume of the electric discharge sound in accordance with the number of occupants.

In the functional substance generation apparatus (E1) of a sixth aspect according to the embodiment, in the fourth or fifth aspect, the target space is preferably a vehicle (C1), and the control signal (Y2) preferably includes a signal based on the speed of the vehicle (C1). The voltage application circuit (11) controls the generation amount of the functional substance according to the speed.

The functional substance generation device (E1) can control the volume of the electric discharge sound in accordance with the speed of the vehicle (C1).

In the functional substance generation device (E1) of a seventh aspect according to the embodiment, in any one of the first to sixth aspects, the control signals (Y1, Y2) preferably include a signal based on a human operation. The voltage application circuit (11) controls the generation amount of the functional substance in accordance with a human operation.

In the functional substance generation device (E1) described above, a person can determine the generation amount of the functional substance on their own will. Thus, the person can adjust the electric discharge sound to a sound volume tolerable for the person or adjust the generation amount of the functional substance to be an amount necessary for the person.

The functional substance generation apparatus (E1) of an eighth aspect according to an embodiment, in any one of the first to seventh aspects, further includes a counter electrode (22) disposed to face the discharge electrode (21). The voltage application circuit (11) applies a voltage (Vo) between the discharge electrode (21) and the counter electrode (22).

The above-described functional substance generation device (E1) can improve the generation efficiency of the functional substance due to the electric discharge generated between the discharge electrode (21) and the counter electrode (22).

The functional substance generation apparatus (E1) of a ninth aspect according to the embodiment, in any one of the first to eighth aspects, preferably further includes a liquid supply section (3) configured to supply the liquid (L1) to the discharge electrode (21). The voltage application circuit (11) generates a functional substance by electrostatically atomizing the liquid (L1) held by the discharge electrode (21) due to electric discharge.

In the above-described functional substance generation device (E1), since the liquid (L1) is automatically supplied to the discharge electrode (21), it is not necessary for a person to supply the liquid (L1) to the discharge electrode (21). Further, the functional substance generation device (E1) can generate a charged fine particle liquid containing radicals. Therefore, the life of the radicals can be extended as compared with a case where the radicals are released alone into the air. Further, since the charged fine particle liquid has, for example, a nanometer size, the charged fine particle liquid can be floated in a relatively wide range.

### REFERENCE SIGNS LIST

E1 functional substance generation device
11 voltage application circuit
111 drive circuit
112 voltage generation circuit
12 detection circuit
121 voltage detection circuit
122 current detection circuit
13 power supply unit
14 signal input unit
141 first input circuit
142 second input circuit
2 load
21 discharge electrode
22 counter electrode
3 liquid supply unit
4 signal generation unit
5 air conditioner
6 operation unit
91 body
92 vehicle interior
93 installation panel
94 seat
95 equipment compartment
96 duct
96a air outlet
Vo application voltage
lo electric discharge current
Io1 first target current value
lo2 second target current value
lo3 third target current value
Ya air conditioning monitoring signal
Yb operation signal
Yc vehicle detection signal
Y1 first control signal
Y2 second control signal
Yi current detection signal
Yv voltage detection signal
C1 vehicle
L1 liquid

## Claims

1. A functional substance generation device, comprising:
a discharge electrode;
a voltage application circuit configured to apply a voltage to the discharge electrode to allow the discharge electrode to generate electric discharge; the voltage application circuit being configured to adjust an electric discharge current that is a current flowing through the discharge electrode, and
a signal input part configured to receive a control signal for controlling an operation of the voltage application circuit,
wherein
the voltage application circuit is configured to control a generation amount of the functional substance based on the control signal.

2. The functional substance generation device according to Claim 1, wherein
the voltage application circuit is configured to control the generation amount of the functional substance by adjusting the electric discharge current based on the control signal.

3. The functional substance generation device according to Claim 1, wherein
the functional substance is contained in air supplied from an air conditioner,
the control signal includes a signal based on an operating state of the air conditioner, and
the voltage application circuit is configured to control the generation amount of the functional substance in accordance with the operating state of the air conditioner.

4. The functional substance generation device according to Claim 1, wherein
the functional substance is supplied to a target space,
the control signal includes a signal based on at least one of a state of a person in the target space or a state of the target space, and
the voltage application circuit is configured to control the generation amount of the functional substance in accordance with the at least one of the state of the person in the target space or the state of the target space.

5. The functional substance generation device according to Claim 4, wherein
the target space is a vehicle,
the control signal includes a signal based on a headcount of one or more occupants in the vehicle, and
the voltage application circuit controls the generation amount of the functional substance in accordance with the headcount of the occupant.

6. The functional substance generation device according to Claim 4, wherein
the target space is a vehicle,
the control signal includes a signal based on a speed of the vehicle, and
the voltage application circuit is configured to control the generation amount of the functional substance in accordance with the speed.

7. The functional substance generation device according to Claim 1, wherein
the control signal includes a signal based on an operation by a person, and
the voltage application circuit is configured to control the generation amount of the functional substance in accordance with the operation by the person.

8. The functional substance generation device according to any one of Claims 1 to 7, further comprising:
a counter electrode disposed to face the discharge electrode,
wherein
the voltage application circuit is configured to apply the voltage between the discharge electrode and the counter electrode.

9. The functional substance generation device according to any one of Claims 1 to 7, further comprising:
a liquid supply unit configured to supply a liquid to the discharge electrode,
wherein
the voltage application circuit is configured to generate the functional substance by electrostatically atomizing the liquid held by the discharge electrode due to the electric discharge.
